# EUROPEAN PATENT APPLICATION

(11) **EP 2 998 432 A1**
(43) Date of publication of application: **23.03.2016**
(21) Application number: 15184506.2
(22) Date of filing: 09.09.2015
(51) Int. Cl.: D06F 58/24, D06F 58/28

(54) **CLOTHES DRYER AND DRYING METHOD THEREOF**

(30) Priority: 18.09.2014 CN 201410478151
(71) Applicant: BSH Hausgeräte GmbH, 81739 München (DE)
(72) Inventor: Birke, Henrik, 10407 Berlin (DE); Jia, Zeng, Wuxi city (CN); Ziegler, Jörg, 81739 München (DE)

(57) **Abstract**

Disclosed is a drying method of a clothes dryer (10), wherein the clothes dryer (10) includes a control device (22), a barrel (4) that receives fabric to be dried, and a condensing device (8) in spatial communication with the barrel (4), wherein the condensing device (8) includes a cooling medium supply device (16), and the method includes determining a cooling medium supply rhythm in the drying process at least according to target drying time. Also disclosed is a clothes dryer (10) that can implement the drying method. As the cooling medium supply rhythm varies according to different to-be-dried fabric information, the drying process is more flexible, and use of a cooling medium can be reduced by using condensation effects of machine parts, thereby saving energy.

## Description

The present invention relates to a method of drying fabric by a clothes dryer, and also relates to a clothes dryer that uses the drying method.

A clothes dryer generally has a barrel that receives fabric to be dried and a condensing device in spatial communication with the barrel. Process air, after being heated, encounters wet fabric in the barrel, evaporates moisture in the fabric, and becomes wet. The wet process air then enters into the condensing device. In the condensing device, the process air exchanges heat with a cooling medium at a lower temperature, and then the moisture therein is condensed and separated from the process air. In addition, in the drying process, heat in the wet process air can also be gradually transferred outwards through barrel walls, various channel walls connected with the barrel and other machine parts, so as to achieve partial condensation effects. Generally, the cooling medium is supplied with a preset fixed rhythm in the clothes dryer, and the drying ends when it is judged that the in-barrel fabric achieves a suitable drying degree. The drying method is not flexible enough and cannot make full use of condensation effects of the machine parts, and thus there is still room for further saving of drying energy consumption.

An object of the present invention is to provide a more flexible drying method, to reduce use of the cooling medium.

With respect to the object, the technical solution adopted in the present invention is: a drying method of a clothes dryer, wherein the clothes dryer includes a control device, a barrel that receives fabric to be dried, and a condensing device in spatial communication with the barrel, wherein the condensing device includes a cooling medium supply device, and the method includes: a) determining target drying time; b) determining a cooling medium supply rhythm at least according to the determined target drying time; and c) in a drying process, supplying a cooling medium with the cooling medium supply rhythm determined in step b).

The target drying time may be determined by a user before starting a drying program, and may also be preset according to different drying programs. For example, when the user selects a night drying program, preset drying time of the program is longer, and when the user selects fast drying, preset drying time of the program is shorter.

Then, when the user has sufficient waiting time, the user may select a longer-time drying mode, and at this point, the control device may adjust the cooling medium supply rhythm to provide a small amount of cooling medium, making walls of the barrel and various channel walls and other machine parts connected with the barrel sufficiently participate in condensation. After absorbing heat, the walls of the barrel and various channel walls and other machine parts connected with the barrel further spread the heat to ambient air or other adjacent members, so as to continuously give play to the condensation effects slowly. In this way, use of the cooling medium is reduced, and resources are saved.

The cooling medium supply rhythm in step b) includes at least two cycles, each of which includes a unit duration and an interval of supply of the cooling medium determined at least according to the target drying time.

In step b), the longer the target drying time is, the smaller time proportion of the unit duration of supply of the cooling medium in each cycle accounts for the whole cycle. When the target drying time is longer, condensation effects of the machine parts are brought into full play by reducing the time proportion that the unit duration of supply of the cooling medium accounts for the whole cycle. In this way, although the overall drying time may be slightly extended, condensation of the machine parts is more sufficient, thus effectively reducing use of the cooling medium.

Under some conditions, the unit duration of supply of the cooling medium includes zero, that is, the cooling medium may not be supplied in the whole cycle, and condensation is completed through heat exchange between process air and the barrel as well as other associated parts.

Correspondence information between target drying time and cooling medium supply rhythms is prestored in the control device.

Preferably, the cooling medium is cooling water.

As a further improvement to the present invention, step a) further includes determining inbarrel fabric information, and in step b), a basis for determining the cooling medium supply rhythm further includes the in-barrel fabric information. The fabric information includes fabric quantity, weight, material or moisture content.

As a further improvement to the present invention, step a) further includes determining a temperature and/or flow rate of the cooling medium, and in step b), a basis for determining the cooling medium supply rhythm further includes the temperature and/or flow rate of the cooling medium.

Preferably, in the drying process, the cooling medium supply rhythm varies with continuation of the drying.

Preferably, in the drying process, the control device continuously detects changes in inbarrel fabric information or changes in information of process air participating in the drying, and adjusts the cooling medium supply rhythm according to the changes in the inbarrel fabric information or the changes in information of process air participating in the drying.

The fabric information includes fabric weight and/or humidity; and the information of process air includes temperature and/or humidity.

Then, with continuation of the drying process, moisture content of the fabric is gradually reduced, and the control device can gradually reduce supply of the cooling medium, preferably, by extending a supply interval of the cooling medium supply device, or shortening a unit supply duration of the cooling medium supply device.

Another object of the present invention is to provide a clothes dryer which is more energy-saving and environment-friendly. With respect to the object, the technical solution adopted by the present invention is: a clothes dryer, including a control device, a barrel that receives fabric to be dried, and a condensing device in spatial communication with the barrel, wherein the condensing device includes a cooling medium supply device, wherein the control device is configured to be capable of controlling operation of the clothes dryer according to the drying method specified hereinabove.

The clothes dryer of the present invention includes various machines having a clothes drying function.

The present invention is further described below with reference to the accompanying drawing.
FIG. 1 is a schematic view of composition of a clothes dryer; and
FIG. 2 is a relation view between cooling medium supply rhythms and target drying time.

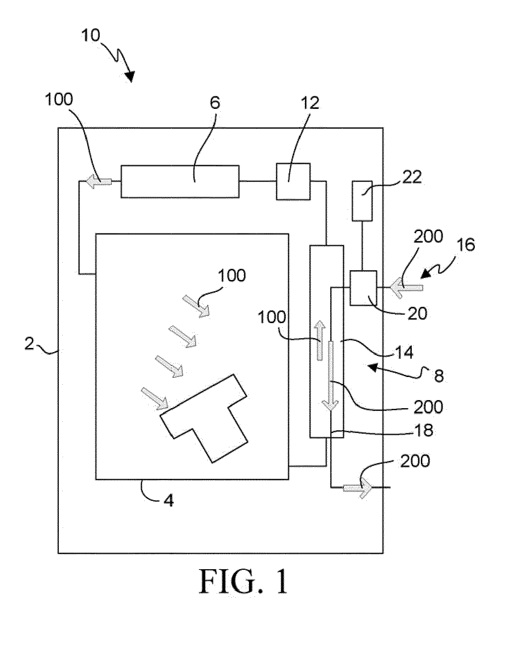

As shown in FIG. 1, a clothes dryer 10 has a cabinet 2 and a barrel 4 installed in the cabinet 2 and receiving clothes to be dried. Upstream and downstream of the barrel 4 are respectively in fluidic communication with an air heating device 6 and a condensing device 8. A blower device 12 is connected between the air heating device 6 and the condensing device 8, so as to urge the air to circulate among the barrel 4, the air heating device 6 and the condensing device 8.

The condensing device 8 includes a process air channel 14 and a cooling medium supply device 16. The cooling medium supply device 16 includes a cooling medium path 18 associated with the process air channel 14 in a heat-conduction manner and a supply element 20 installed on the cooling medium path 18. Whether the supply element 20 is opened is controlled by a control device 22.

In a specific implementation manner of the condensing device 8, the cooling medium is water, the supply element 20 is a water valve, a part of the cooling medium path 18 outside the process air channel 14 is a water pipe, and a part thereof in the process air channel 14 may not have a separate pipeline, but extends downwards directly along inner walls of the process air channel 14, or sprays downwards in the process air channel 14.

In the drying process, process air 100, after being heated by the air heating device 6, enters into the barrel 4, and after contacting wet fabric therein, evaporates moisture contained in the fabric. The wet process air 100 then enters into the process air channel 14 of the condensing device 8, and exchanges heat therein with a cooling medium 200 in the cooling medium path 18, then the temperature of the process air 100 is decreased, and moisture therein is condensed and separated from the process air. Afterwards, the process air 100 becomes dry and re-enters into the air heating device 6, and enters next circulation after being heated, so as to gradually separate the moisture from the fabric.

In the drying process, supply of the cooling medium 200 is determined by the supply element 20, and is controlled by the control device 22. The supply element 20 is opened/closed according to a certain rhythm, or provides the cooling medium 200 of which the flow rate is adjustable.

After a drying program is started, the control device 22 first determines target drying time. In order to control the drying process more reasonably, the control device 22 may also need to determine in-barrel fabric information, for example, fabric quantity or weight, fabric moisture content, fabric material and other information. Different information indicates different moisture content of the fabric, and different drying temperatures that can be borne and the like. At the same time, condensation solutions in the subsequent drying process are also affected. In addition, the control device 22 may also need to determine other information, for example, cooling medium temperature, flow velocity, target energy consumption and so on.

After determination of the information, the control device 22 determines a rhythm of supply of the cooling medium 200 at least according to the determined target drying time; and in the subsequent drying process, supplies the cooling medium 200 with the determined rhythm of supply of the cooling medium.

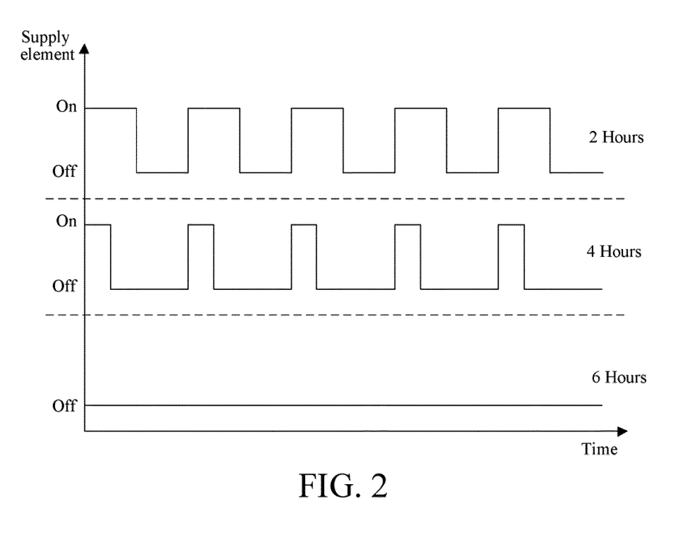

Specifically, in the implementation solution, correspondence information between target drying time and cooling medium supply rhythms is prestored in the control device 22. As shown in FIG. 2, lots of target drying time is prestored in the control device 22, which is not limited to that illustrated in FIG. 2. Each target drying time corresponds to one cooling medium supply rhythm. The cooling medium supply rhythm includes at least two cycles, each of which includes a unit duration and an interval of supply of the cooling medium determined at least according to the target drying time, which is embodied in this embodiment as that each cycle includes opening time and closed time of the supply element 20. The correspondence information between target drying time and cooling medium supply rhythms is pre-obtained through experiments. After the drying program is started, the control device 22 determines the cooling medium supply rhythm in the drying process according to a rhythm corresponding to the target drying time.

It can be seen from FIG. 2 that, the longer the target drying time is, the smaller time proportion of the unit duration of supply of the cooling medium in each cycle accounts for the whole cycle. The reason is that when the target drying time is longer, condensation effects of the machine parts are brought into fullest play by reducing an average supply amount of the cooling medium. In this way, condensation of the machine parts is more sufficient, thus effectively reducing use of the cooling medium.

When the target drying time is extended to a certain degree, in an ideal situation, the cooling medium may not be supplied in the whole drying process, and condensation is completed through heat exchange between process air and the barrel as well as other associated parts.

As a preferred implementation manner, a basis for determining the cooling medium supply rhythm by the control device further includes in-barrel fabric information, for example, fabric quantity, weight, material or moisture content, etc. Even, the basis further includes a temperature and/or flow rate of the cooling medium. One or more of the information is/are combined to determine the cooling medium supply rhythm, so as to make the drying more reasonable and more energy-saving.

As a preferred implementation manner, in the drying process, the control device 22 continuously detects changes in in-barrel fabric information or changes in information of process air participating in the drying, and adjusts the cooling medium supply rhythm according to the changes in the in-barrel fabric information or the changes in information of process air participating in the drying. The fabric information includes fabric weight and/or humidity; and the information of process air includes temperature and/or humidity. Then, with continuation of the drying process, moisture content of the fabric is gradually reduced, and the control device 22 can gradually reduce supply of the cooling medium. Reduction of supply of the cooling medium can be achieved by extending a supply interval of the cooling medium supply device or shortening a unit supply duration of the cooling medium supply device.

Various specific implementations described above and illustrated in the figures are merely used for describing the present invention, but are not all of the present invention. Any form of variations made to the present invention by those of ordinary skill in the art within the basic technical thought of the present invention should fall within the protection scope of the present invention.

## Claims

1. A drying method of a clothes dryer, wherein the clothes dryer comprises a control device, a barrel that receives fabric to be dried, and a condensing device in spatial communication with the barrel, wherein the condensing device comprises a cooling medium supply device, and the method comprises: a) determining target drying time; b) determining a cooling medium supply rhythm at least according to the determined target drying time; and c) in a drying process, supplying a cooling medium with the cooling medium supply rhythm determined in step b).

2. The drying method according to claim 1, **characterized in that**, the cooling medium supply rhythm in step b) comprises at least two cycles, each of which comprises a unit duration and an interval of supply of the cooling medium determined at least according to the target drying time.

3. The drying method according to claim 2, **characterized in that**, in step b), the longer the target drying time is, the smaller time proportion of the unit duration of supply of the cooling medium in each cycle accounts for a the whole cycle.

4. The drying method according to claim 2, **characterized in that**, the unit duration of supply of the cooling medium comprises zero.

5. The drying method according to claim 1, **characterized in that**, correspondence information between target drying time and cooling medium supply rhythms is prestored in the control device.

6. The drying method according to claim 1, **characterized in that**, the cooling medium is cooling water.

7. The drying method according to claim 1, **characterized in that**, step a) further comprises determining in-barrel fabric information, and in step b), a basis for determining the cooling medium supply rhythm further comprises the in-barrel fabric information.

8. The drying method according to claim 7, **characterized in that**, the fabric information comprises fabric quantity, weight, material or moisture content.

9. The drying method according to claim 1, **characterized in that**, step a) further comprises determining a temperature and/or flow rate of the cooling medium, and in step b), a basis for determining the cooling medium supply rhythm further comprises the temperature and/or flow rate of the cooling medium.

10. The drying method according to claim 1, **characterized in that**, in the drying process, the cooling medium supply rhythm varies with continuation of the drying.

11. The drying method according to claim 10, **characterized in that**, in the drying process, the control device continuously detects changes in in-barrel fabric information or changes in information of process air participating in the drying, and adjusts the cooling medium supply rhythm according to the changes in the in-barrel fabric information or the changes in information of process air participating in the drying.

12. The drying method according to claim 9, **characterized in that**, fabric information comprises fabric weight and/or humidity; and the information of process air comprises temperature and/or humidity.

13. A clothes dryer, comprising a control device, a barrel that receives fabric to be dried, and a condensing device in spatial communication with the barrel, wherein the condensing device comprises a cooling medium supply device, **characterized in that**, the control device is configured to be capable of controlling operation of the clothes dryer according to the drying method according to any one of the preceding claims.
